# FASCICULE DE BREVET EUROPEEN

(11) **EP 0 760 941 B1**
(45) Date de publication et mention de la délivrance du brevet: **21.04.1999**
(21) Numéro de dépôt: 95920976.8
(22) Date de dépôt: 23.05.1995
(51) Int. Cl.: G01N 3/18, H05B 6/02

(54) **SYSTEME DE CARACTERISATION THERMOMECANIQUE DE MATERIAUX UTILISANT UN DISPOSITIF DE CHAUFFAGE RAPIDE PAR INDUCTION**
THERMISCH-MECHANISCH MATERIALPRÜFSYSTEMMITTELS EINES SCHNELLEN INDUKTIONSHEIZGERÄTES
SYSTEM FOR THERMOMECHANICALLY CHARACTERIZING MATERIALS THROUGH A HIGH SPEED INDUCTION HEATING DEVICE

(30) Priorité: 26.05.1994 FR 9406388
(43) Date de publication de la demande: 12.03.1997
(73) Titulaire: COMMISSARIAT A L'ENERGIE ATOMIQUE, 75015 Paris (FR)
(72) Inventeur: ROCHARD, Pierre, F-78120 Orphin (FR); AZZOLINI, Raymond, F-91180 Saint-Germain-les-Arpajon (FR)
(74) Mandataire: Des Termes, Monique
(86) Numéro de dépôt international: FR9500673
(87) Numéro de publication internationale: WO9533194

(56) Documents cités:
- EP-A- 0 430 138
- EP-A- 0 567 417
- WO-A-93/08456
- DE-A- 3 047 849
- FR-A- 2 517 920
- GB-A- 2 195 184
- US-A- 4 687 343
- DATABASE WPI Section Ch, Week 7919 Derwent Publications Ltd., London, GB; Class L02, AN 79-35741B & FR,A,2 399 391 ( NOVATOME INDUSTRIES) , 6 Avril 1979
- AEI ENGINEERING, Juillet 1964 GB, pages 210-211, P.B.ALLISON 'induction-heated reaction vessels'

## Description

### Domaine technique

La présente invention a pour objet un système de caractérisation thermomécanique d'un échantillon de matériau soumis à un échauffement dynamique généré par un dispositif de chauffage par induction.

Elle trouve de nombreuses applications dans les domaines de l'aéronautique, de l'automobile et dans tous les domaines utilisant des matériaux nouveaux.

### Etat de la technique

Pour utiliser ces matériaux nouveaux, il est généralement nécessaire de connaître les comportements thermomécaniques de ces matériaux, c'est-à-dire de connaître les valeurs des déformations d'un matériau soumis simultanément à un échauffement dynamique et à un effort de contrainte.

De nombreux dispositifs permettent classiquement de déterminer des caractéristiques thermomécaniques de matériaux. Cependant, la plupart de ces dispositifs ne permettent qu'une montée en température relativement lente, ce qui n'est pas réellement représentatif des sollicitations thermiques d'un matériau dans son utilisation "normale".

Aussi, différentes sortes de chauffage peuvent être envisagées pour permettre une montée en température rapide :
- le chauffage par four solaire décrit dans le document de support du Symposium international des 21-23 septembre 1992, intitulé "Ultra high temperature mechanical testing" et plus particulièrement dans le chapitre "Measurement of high temperature emissivity on opaque materials using a temperature controlled solar furnace". Ce type de chauffage permet de générer un flux thermique d'environ 6,4 MW/cm², ce qui permet à un échantillon d'être porté à une température d'environ 2 800°C. Cependant, la mise en oeuvre d'un tel chauffage a pour inconvénient de nécessiter l'utilisation d'une sphère d'intégration ;
- le chauffage par laser CO₂ commercialisé par la Société OPTILAS ; ce chauffage assure une puissance de 6 kW maximum et donc une température maximale de 2 000°C sur l'échantillon. Un tel type de chauffage ne permet pas une montée en température suffisamment rapide ; en outre, sa mise en oeuvre nécessite l'utilisation d'une sphère d'intégration ;
- le chauffage par lampes à arc au xénon, commercialisé par la Société OPTILAS permet de générer une puissance suffisante pour atteindre une température d'échantillon de 3 300°C, mais il nécessite l'utilisation d'un nombre important de lampes d'un coût fort onéreux. Néanmoins, ce type de chauffage, comme les deux types de chauffage par rayonnements lumineux cités précédemment, sont difficilement intégrables dans un système de caractérisation thermomécanique ;
- le chauffage par effet Joule direct qui consiste à faire passer un courant électrique dans un échantillon de matériau. Un tel type de chauffage est difficilement associable aux moyens permettant de générer des efforts mécaniques du fait des importantes pertes thermiques de ces moyens et des pertes radiatives de la surface de l'échantillon ;
- le chauffage résistif commercialisé par les Sociétés IPSEN (en France) et CENTORR (aux USA) ; il utilise un résistor en graphite et des écrans de calfeutrement en feutre de graphite. Ce chauffage qui peut permettre d'atteindre une température d'échantillon de 3000°C, n'assure qu'une montée en température lente avoisinant les 1 500°C/h. De plus, ce type de chauffage présente l'inconvénient que, avec le temps, le résistor se dégrade par sublimation.

Un dispositif pour tester le fluage d'un élément de forme complexe est décrit dans le document GB-A-2 195 184. Ce dispositif est destiné à mettre en température le corps à tester, le plus longtemps possible et avec une température bien stabilisée et connue. Il comporte une enveloppe isolante à l'intérieur de laquelle est déposé l'élément, des moyens de pression pour soumettre l'élément à un effort et des moyens de chauffage pour porter l'élément à une température choisie. Ces moyens de chauffage comprennent une bobine d'induction entourant l'enveloppe isolante et des moyens suscepteurs disposés entre l'élément et l'enveloppe isolante.

Un dispositif de compression d'échantillon soumis à une température élevée est décrit dans le document WO-A-93 08456. Ce dispositif comporte des moyens assurant une compression uniaxiale pure de l'échantillon, ainsi que des moyens de chauffage de cet échantillon. Ces moyens de chauffage comprennent deux demi-résistors assurant le chauffage dans toute une zone de chauffe située autour de l'échantillon et des moyens de compression ; il comporte, en outre, un bouclier thermique entourant les demi-résistors pour isoler la zone de chauffe de l'extérieur.

### Exposé de l'invention

La présente invention a justement pour but de remédier à ces inconvénients. A cette fin, elle propose un système de caractérisation thermomécanique de matériaux utilisant un dispositif de chauffage par induction permettant à l'échantillon d'atteindre une température de 3 300°C en un maximum de 20 secondes.

Un tel chauffage par induction est réalisé au moyen d'un suscepteur qui est placé dans un champ magnétique variable et qui induit une force électromotrice. Les courants induits (ou courants de Foucault) qui parcourent ce suscepteur se transforment ensuite en chaleur. L'échantillon est donc chauffé par les rayonnements émis par le suscepteur.

De façon plus précise, l'invention concerne un système de caractérisation thermomécanique d'un matériau comprenant :
- une enceinte isolante à l'intérieur de laquelle se trouve un échantillon de matériau de forme sensiblement cylindrique ;
- des moyens de pression fixes et des moyens de pression mobiles situés au moins en partie dans l'enceinte et entre lesquels est déposé l'échantillon, ces moyens de pression étant aptes à soumettre l'échantillon à un effort de compression ;
- des moyens de commande de l'effort à appliquer sur l'échantillon ;
- des moyens de visées pour déterminer les déformations subies par l'échantillon.

Ce système se caractérise par le fait qu'il comporte des moyens de chauffage rapide par induction disposés dans l'enceinte et comprenant :
- des moyens inducteurs disposés au moins en partie autour de l'échantillon et générant des courants induits ;
- des moyens suscepteurs disposés entre l'échantillon et les moyens inducteurs pour transformer les courants induits en rayonnements de chaleur ; et
- des moyens de protection thermique disposés entre les moyens inducteurs et les moyens suscepteurs pour protéger lesdits moyens inducteurs des rayonnements de chaleur émis par les moyens suscepteurs,
- des moyens d'isolation comportant une couche de matériau apte à résister à une tension de claquage de l'ordre de 3 000 V et entourant les moyens inducteurs sur leurs côtés autres que celui faisant face aux moyens de protection thermique.

Ces moyens inducteurs comportant au moins une bobine d'induction de section carrée ayant un côté faisant face aux moyens de protection thermique et séparé de ces moyens de protection thermique par une lame d'air. Cette bobine peut comporter une ailette interne logée à l'intérieur de ladite bobine pour assurer une plus grande surface d'échange de chaleur.

Selon l'invention, les moyens inducteurs comportent une couche de béton réfractaire qui entoure la bobine d'induction sur les côtés qui ne sont pas en contact avec les moyens de protection thermique.

Selon un mode de réalisation de l'invention, les moyens inducteurs comportent trois bobines d'inductions parallèles les unes aux autres.

Selon une caractéristique de l'invention, les moyens de protection thermique consistent en une couche d'alumine (Al₂O₃) ayant des porosités remplies d'un enduit à base de gel de céramique.

Les moyens de chauffage rapide comportent en outre :
- un plateau supérieur recouvrant les moyens inducteurs, les moyens suscepteurs et les moyens de protection thermique ; et
- un plateau inférieur disposé symétriquement au plateau supérieur par rapport à l'échantillon. Au moins une partie de ces plateaux constituent une canalisation permettant la circulation d'un liquide de refroidissement.

Ces moyens de chauffage peuvent comporter de plus deux bouchons isolants supérieur et inférieur introduits, respectivement, entre le plateau supérieur et les moyens de pression et entre le plateau inférieur et les moyens de pression pour assurer un confinement de la chaleur entre les deux plateaux.

Selon l'invention, les moyens de chauffage rapide comportent des percées radiales permettant le passage des moyens de visée.

Ces moyens de chauffage rapide permettent d'atteindre ainsi une température d'au moins 3 300°C avec une vitesse comprise entre sensiblement 160 et 200°C/s.

### Brève description des dessins

- La figure 1 représente une vue de face en coupe partielle du système de caractérisation de matériaux ;
- la figure 2 représente une coupe en perspective du dispositif de chauffage rapide selon l'invention.

### Exposé détaillé d'un mode de réalisation de l'invention

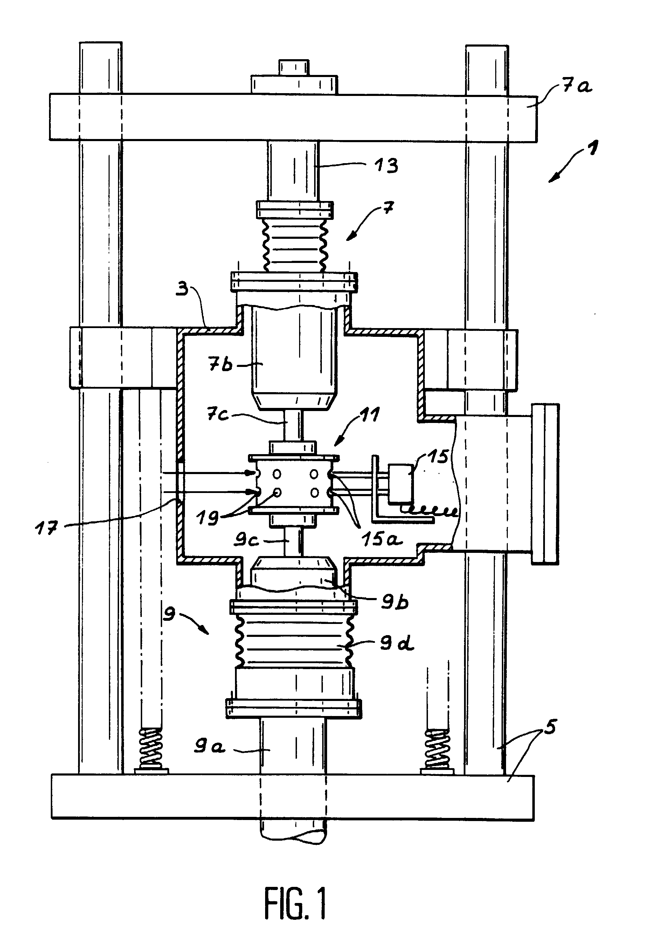

Sur la figure 1, on a représenté le système 1 de caractérisation thermomécanique de matériaux vu de face. L'enceinte isolante 3 a été représentée en coupe partielle de façon à laisser voir les moyens qui se trouvent à l'intérieur.

Ce sytème 1 de caractérisation comporte un bâti 5 d'essais mécaniques auquel sont fixés des moyens de pression fixes 7 et des moyens de pression mobiles 9 aptes à compresser l'échantillon pour qu'il soit soumis à un effort de compression mécanique de force F ; cet échantillon n'est pas visible sur la figure 1 car il est disposé à l'intérieur du dispositif de chauffage 11.

Les moyens de pression fixes 7 comportent classiquement une traverse supérieure 7a, un mors hydraulique supérieur 7b et un piston fixe 7c.

Les moyens de pression mobiles 9 comportent classiquement un vérin mobile 9a, un mors hydraulique inférieur 9b, un piston mobile 9c et un soufflet inférieur 9d qui assure la mobilité du vérin 9a.

Les mors hydrauliques inférieur 9b et supérieur 9c sont disposés, au moins en partie, à l'intérieur de l'enceinte isolante 3.

Les pistons mobile 9c et fixe 7c sont situés également à l'intérieur de l'enceinte isolante 3 et sont même, en partie, introduits dans le dispositif de chauffage 11.

L'échantillon de matériau à caractériser se trouve à l'intérieur du dispositif de chauffage 11, entre le piston mobile 9c et le piston fixe 7c. Ainsi, l'échantillon peut être simultanément chauffé par le dispositif de chauffage 11 et compressé par les pistons 7c et 9c.

Une cellule de mesure 13 située en partie supérieure du système 1 de caractérisation permet de mesurer la valeur des efforts appliqués à l'échantillon.

L'enceinte étanche 3 comporte des ouvertures 17, ou percées, par lesquelles sont effectuées différentes visées qui permettent d'effectuer des mesures sur l'échantillon :
- une visée pyrométrique qui permet d'assurer une régulation de la température de l'échantillon ; et
- des visées extensométriques qui permettent de mesurer, au moyen d'un extensomètre laser, les déformations subies par l'échantillon jusqu'à une température d'échantillon de 2 500°C.

L'enceinte étanche 3 comporte de plus des percées 15a assurant le passage d'un extensomètre de contact 15 qui permet de mesurer les déformations subies par l'échantillon dans les cas où la température de l'échantillon est inférieure à 2 500°C. Dans les cas où l'échantillon est porté à une température supérieure ou égale à 2 500°C, ces percées 15a sont rebouchées par des bouchons en Alumine.

Des percées 17 assurent, en outre, le passage d'une sonde à thermocouples. Cette sonde vérifie si la température mesurée de l'échantillon correspond aux températures de consignes mémorisées ; elle protège ainsi le dispositif de chauffage 11 contre toute élévation de température anormale (pouvant résulter notamment d'un flash électrique) et contre tout défaut de refroidissement.

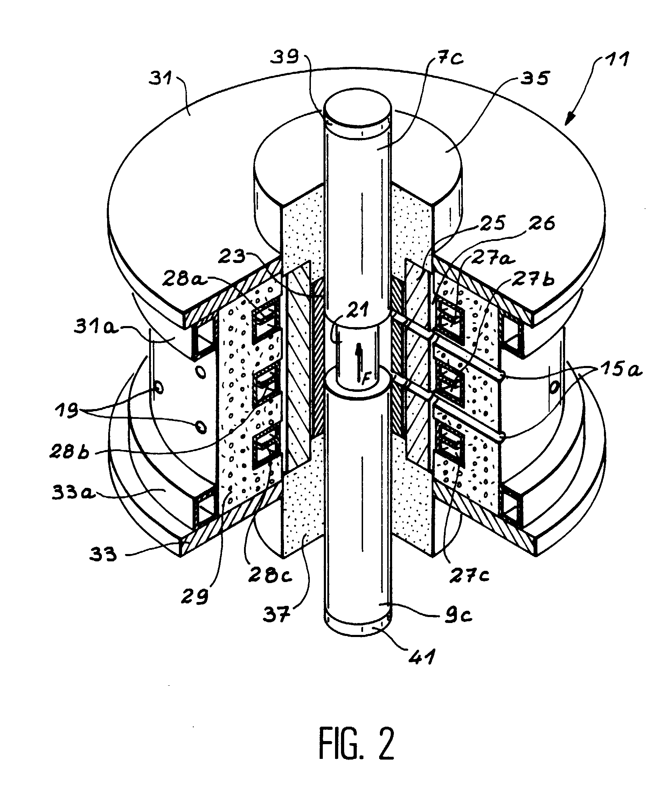

Sur la figure 2, on a représenté une vue en perspective du dispositif de chauffage 11. Cette figure montre le dispositif de chauffage 11 en coupe.

Sur cette figure 2, on a représenté l'échantillon 21 de matériau à étudier disposé entre les pistons fixe 7c et mobile 9c. Cet échantillon 21 est soumis à la force de compression F.

Autour de l'échantillon 21, sont disposés en couches circulaires :
- des moyens suscepteurs 23, appelés aussi plus simplement suscepteurs ;
- des moyens de protection thermique 25, appelés aussi bouclier thermique ; et
- des moyens inducteurs 27a, 27b, 27c.

De façon plus précise, ces moyens inducteurs comportent au moins une bobine d'induction.

Selon le mode de réalisation préféré de l'invention, les moyens inducteurs comprennent trois bobines d'inductions 27a, 27b, 27c disposées parallèlement les unes aux autres dans le sens longitudinal. Ces bobines ont chacune une section carrée ; elles ont chacune un côté, qui est séparé du bouclier thermique 25 par une lame d'air 26 de façon à ne pas être en contact direct avec ce bouclier thermique 25. Elles sont entourées, sur les trois autres côtés d'une couche de béton réfractaire 29 assurant une isolation entre la partie du dispositif 11 soumise à la forte température et l'enceinte. Cette couche 29 de béton est une couche très poreuse, en alumine (Al₂O₃), dont les porosités sont remplies d'un enduit à base de gel céramique. L'ensemble est apte à résister à une tension de claquage d'environ 3 000 V en évitant la diffusion de carbone vers l'inducteur.

Avantageusement, ces bobines 27a, 27b, 27c comportent chacune une ailette interne, référencée respectivement 28a, 28b, 28c, qui permet d'augmenter la surface d'échange des bobines et, de ce fait, de faciliter l'évacuation de l'énergie fournie par les bobines vers le coeur du dispositif de chauffage 11.

Le suscepteur 23 est disposé sensiblement autour de l'échantillon 21 dans le champ magnétique créé par les bobines d'induction 27a, 27b, 27c du dispositif de chauffage 11. Ce suscepteur 23 est parcouru par les courants induits par les bobines (ou courants de Foucault) qu'il transforme en rayonnements de chaleur. L'échantillon 21 soumis à ces rayonnements de chaleur monte en température, jusqu'à la température choisie pour étudier le comportement du matériau. Selon un mode de réalisation de l'invention, ce suscepteur est en graphite.

Le bouclier thermique 25 permet de protéger les bobines d'induction 27a, 27b, 27c des rayonnements émis par le suscepteur 23. Selon l'invention, ce bouclier thermique est réalisé en isolant carbone.

Le dispositif de chauffage 11 comporte en outre des plateaux en forme de couronnes, à savoir un plateau supérieur 31 et un plateau inférieur 33 qui recouvrent les moyens inducteurs 27a, 27b, 27c. Ces plateaux 31 et 33 sont réalisés en cuivre et comportent chacun une canalisation, respectivement 31a et 33a, dans laquelle circule un liquide de refroidissement permettant de favoriser une évacuation rapide des calories exessives. Ces plateaux permettent en outre de rigidifier l'ensemble du dispositif.

Selon un mode de réalisation de l'invention, des bouchons isolants supérieur 35 et inférieur 37 sont logés dans l'ouverture centrale respective des plateaux 31 et 33. Ces bouchons isolants 35 et 37, réalisés, par exemple en feutre de graphite rigidifié de faible densité, assurent le confinement de la chaleur au coeur du dispositif de chauffage 11. Ils permettent en outre d'éliminer les gradients thermiques et les pertes calorifiques radiales et longitudinales.

Selon un mode de réalisation de l'invention, le confinement de la chaleur est encore amélioré en disposant, aux extrémités supérieure et inférieure de leur piston respectif 7c et 9c, des barrières thermiques 39 et 41 qui minimisent les pertes des calories longitudinales et assurent ainsi de faibles gradients longitudinaux sur l'échantillon.

Sur cette figure 2, sont également représentés des percées 19 pour les visées extensométriques ou pyrométriques et des percées 15a pour le passage de l'extensomètre de contact.

Le dispositif de chauffage 11 tel que représenté sur la figure 2 est donc apte à fournir une température de 3 300°C en un temps de montée d'environ 16 à 20 secondes, ce qui conduit à une vitesse de montée en température d'environ 160 à 200°C/s. De telles performances peuvent être atteintes avec un gradient de température longitudinal sur l'échantillon de seulement 4 % à 3 200°C et avec un gradient de température radial sur l'échantillon négligeable.

On comprendra, bien entendu, que ce dispositif de chauffage peut également être utilisé dans des cas où un chauffage lent est nécessaire ainsi que dans les cas où la température de l'échantillon doit être plus faible que 3 300°C.

## Revendications

1. Système de caractérisation thermomécanique d'un matériau comprenant :
- une enceinte isolante (3) à l'intérieur de laquelle se trouve un échantillon de matériau (21) de forme sensiblement cylindrique ;
- des moyens de pression fixes (7) et des moyens de pression mobiles (9) situés au moins en partie dans l'enceinte et entre lesquels est déposé l'échantillon, ces moyens de pression étant aptes à soumettre l'échantillon à un effort de compression (F) ;
- des moyens (13) de commande de l'effort à appliquer sur l'échantillon ;
- des moyens de visées pour déterminer les déformations subies par l'échantillon,
caractérisé en ce qu'il comporte des moyens (11) de chauffage rapide par induction disposés dans l'enceinte et comprenant :
- des moyens inducteurs (27a-c) disposés au moins en partie autour de l'échantillon et générant des courants induits ;
- des moyens suscepteurs (23) disposés entre l'échantillon et les moyens inducteurs pour transformer les courants induits en rayonnements de chaleur ;
- des moyens (25) de protection thermique disposés entre les moyens inducteurs et les moyens suscepteurs pour protéger lesdits moyens inducteurs des rayonnements de chaleur émis par les moyens suscepteurs, ces moyens inducteurs comportant au moins une bobine d'induction (27a ou 27b ou 27c) de section carrée ayant un côté faisant face aux moyens de protection thermique, et séparé de ces moyens de protection thermique par une lame d'air (26) ;
- des moyens d'isolation (29) comportant une couche de matériau apte à résister à une tension de claquage de l'ordre de 3 000 V et entourant les moyens inducteurs sur leurs côtés autres que celui faisant face aux moyens de protection thermique.

2. Système selon la revendication 1, caractérisé en ce que la bobine d'induction comporte une ailette interne (28a ou 28b ou 28c) logée à l'intérieur de ladite bobine pour assurer une plus grande surface d'échange de chaleur.

3. Système selon la revendication 1 ou 2, caractérisé en ce que la couche de matériau est du béton réfractaire (29) en Al₂O₃, très poreux, rempli d'un enduit à base de gel céramique.

4. Système selon l'une quelconque des revendications 1 à 3, caractérisé en ce que les moyens inducteurs comportent trois bobines d'inductions parallèles les unes aux autres.

5. Système selon l'une quelconque des revendications 1 à 4, caractérisé en ce que les moyens de protection thermique consistent en un bouclier thermique en isolant carbone.

6. Système selon l'une quelconque des revendications 1 à 5, caractérisé en ce que les moyens de chauffage rapide comportent en outre :
- un plateau supérieur (31) recouvrant les moyens inducteurs, les moyens d'isolation, les moyens suscepteurs et les moyens de protection thermique ; et
- un plateau inférieur (33) disposé symétriquement au plateau supérieur par rapport à l'échantillon.

7. Système selon la revendication 6, caractérisé en ce qu'au moins une partie de ces plateaux (31a, 33a) constitue une canalisation pour permettre une circulation d'un liquide de refroidissement.

8. Système selon la revendication 6 ou 7, caractérisé en ce que les moyens de chauffage rapide comportant deux bouchons isolants supérieur (35) et inférieur (37) introduits, respectivement, entre le plateau supérieur et les moyens de pression et entre le plateau inférieur et les moyens de pression pour assurer un confinement de la chaleur entre les deux plateaux.

9. Système selon l'une quelconque des revendications 1 à 8, caractérisé en ce que les moyens de chauffage rapide comportent des percées radiales (15a, 19) permettant le passage des moyens de visée.

10. Système selon l'une quelconque des revendications 1 à 9, caractérisé en ce que les moyens de chauffage rapide permettent d'atteindre une température d'au moins 3 300°C avec une vitesse comprise entre sensiblement 160 et 200°C/s.

## Patentansprüche

1. Thermisch-mechanisches Materialprüfsystem, umfassend:
- ein isolierendes Gehäuse (3), in dessen Innern sich eine Materialprobe (21) von im wesentlichen zylindrischer Form befindet;
- feststehende Preßeinrichtungen (7) und bewegliche Preßeinrichtungen (9), die sich wenigstens teilweise in dem Gehäuse befinden und zwischen denen eine Probe angeordnet wird, wobei diese Preßeinrichtungen auf die Probe einen Druck (F) ausüben können;
- Steuereinrichtungen (13) des auf die Probe ausgeübten Drucks;
- Beobachtungseinrichtungen, um die Verformungen der Probe festzustellen,
**dadurch gekennzeichnet**, daß es Schnellheiz-Induktionseinrichtungen enthält, angeordnet in dem Gehäuse und umfassend:
- Induktionseinrichtungen (27a-c), wenigstens teilweise um die Probe herum angeordnet und induzierte Ströme erzeugend;
- Suszeptibilitätseinrichtungen (23), angeordnet zwischen der Probe und den Induktionseinrichtungen, um die induzierten Ströme in Wärmestrahlung umzuwandeln;
- Wärmeschutzeinrichtungen (25), angeordnet zwischen den Induktionseinrichtungen und den Suszeptibilitätseinrichtungen, um die genannten Induktionseinrichtungen gegen die durch die Suseptibilitätseinrichtungen abgestrahlten Wärmestrahlen zu schützen, wobei diese Induktionseinrichtungen wenigstens eine Induktionsspule (27a oder 27b oder 27c) mit quadratischem Querschnitt umfassen, wovon eine Seite den Wärmeschutzeinrichtungen gegenübersteht und von diesen Wärmeschutzeinrichtungen durch eine Luftschicht (26) getrennt ist;
- Isolationseinrichtungen (29) mit einer Materialschicht, die einer Durchschlagspannung in der Größenordnung von 3 000 V widersteht und die Induktionseinrichtungen auf ihren Seiten umgibt, ausgenommen die den Wärmeschutzeinrichtungen gegenüberstehende Seite.

2. System nach Anspruch 1, dadurch gekennzeichnet, daß die Induktionsspule eine Innenrippe (28a oder 28b oder 28c) umfaßt, die in das Innere der genannten Spule hineinragt, um eine größere Wärmeaustauschfläche zu garantieren.

3. System nach Anspruch 1 oder 2, dadurch gekennzeichnet, daß die Materialschicht ein sehr poröser hitzebeständiger Al₂O₃-Beton (29) ist, ausgefüllt mit Kitt auf der Basis von keramischem Gel.

4. System nach einem der Ansprüche 1 bis 3, dadurch gekennzeichnet, daß die Induktionseinrichtungen drei zueinander parallele Induktionsspulen umfassen.

5. System nach einem der Ansprüche 1 bis 4, dadurch gekennzeichnet, daß die Wärmeschutzeinrichtungen durch einem Wärmeschild aus Kohlenstoff-Isoliermaterial gebildet werden.

6. System nach einem der Ansprüche 1 bis 5, dadurch gekennzeichnet, daß die Schnellheizeinrichtungen außerdem umfassen:
- eine obere Platte (31), die die Induktionseinrichtungen, die Isolationseinrichtungen, die Suszeptibilitätseinrichtungen und die Wärmeschutzeinrichtungen bedeckt; und
- eine untere Platte (33), symmetrisch zur oberen Platte angeordnet in bezug auf die Probe.

7. System nach Anspruch 6, dadurch gekennzeichnet, daß wenigstens ein Teil dieser Platten (31a, 33a) einen Kanal bildet, um eine Zirkulation einer Kühlflüssigkeit zu ermöglichen.

8. System nach Anspruch 6 oder 7, dadurch gekennzeichnet, daß die Schnellheizeinrichtungen zwei isolierende Deckel umfassen, oben (35) und unten (37), jeweils eingefügt zwischen die obere Platte und die Preßeinrichtungen und die untere Platte und Preßeinrichtungen, um die Wärme zwischen den beiden Platten einzuschließen.

9. System nach einem der Ansprüche 1 bis 8, dadurch gekennzeichnet, daß die Schnellheizeinrichtungen Radialbohrungen (15a, 19) umfassen, die den Durchgang der Beobachtungseinrichtungen ermöglichen.

10. System nach einem der Ansprüche 1 bis 9, daß die Schnellheizeinrichtungen das Erreichen einer Temperatur von wenigstens 3 300°C mit einer Geschwindigkeit ermöglichen, die im wesentlichen zwischen 160 und 200°C/s enthalten ist.

## Claims

1. System for the thermomechanical characterization of a material, comprising:
- an insulating chamber (3), inside which there is an approximately cylindrical material sample (21);
- fixed pressure means (7) and mobile pressure means (9) located at least partly in the chamber and between which the sample is positioned, these pressure means being capable of applying a compression force (F) to the sample;
- means (13) of controlling the force to be applied on the sample;
- sighting means to determine deformations experienced by the sample,
characterized in that it comprises fast induction heating means (11) placed in the chamber and comprising:
- induction means (27a-c) placed at least partly around the sample and generating induced currents,
- susceptor means (23) placed between the sample and induction means to transform induced currents into heat radiation;
- thermal protection means (25) placed between the induction means and the susceptor means, to protect said induction means from heat radiation emitted by the susceptor means, said induction means having at least one induction coil (27a or 27b or 27c) with a square cross-section and having one side facing the thermal protection means and separated from the latter by an air gap (26);
- insulation means (29) having a material layer able to withstand a breakdown voltage of approximately 3000 V and surrounding the induction means on their sides other than that facing the thermal protection means.

2. System according to claim 1, characterized in that the induction coil includes an internal rib (28a or 28b or 28c) housed inside said coil to provide a larger heat exchange area.

3. System according to claim 1 or 2, characterized in that the material is of very porous Al₂O₃ refractory concrete (29) filled with a ceramic gel based coating.

4. System according to one of the claims 1 to 3, characterized in that the induction means comprise three induction coils parallel to each other.

5. System according to any one of the claims 1 to 4, characterized in that the thermal protection means consist of a carbon insulation thermal shield.

6. System according to any one of the claims 1 to 5, characterized in that the fast heating means also comprise:
- an upper plate (31) covering the induction means, insulation means, susceptor means and thermal protection means; and
- a lower plate (33) placed symmetrically to the upper plate, with respect to the sample.

7. System according to claim 6, characterized in that at least part of these plates (31a, 33a) forms a duct to enable circulation of a cooling liquid.

8. System according to claim 6 or 7, characterized in that the fast heating means comprise two upper (35) and lower (37) insulating plugs inserted between the upper plate and the pressure means, and between the lower plate and the pressure means respectively, to confine heat between the two plates.

9. System according to any one of claims 1 to 8, characterized in that the fast heating means include radial drillings (15a, 19) to enable sighting means to pass through.

10. System according to any one of claims 1 to 9, characterized in that the fast heating means can reach a temperature of at least 3300°C at a rate of between approximately 160 and 200°C/sec.
